# EUROPEAN PATENT SPECIFICATION

(11) **EP 2 048 290 B1**
(45) Date of publication and mention of the grant of the patent: **05.03.2014**
(21) Application number: 08017346.1
(22) Date of filing: 02.10.2008
(51) Int. Cl.: E02F 3/627, A01B 59/00, A01D 87/00, B62D 49/02

(54) **Coupling device with semi-automatic locking for the detachable coupling of an implement to a utility vehicle**
Kupplungsvorrichtung mit halbautomatischer Verriegelung für die lösbare Kupplung eines Werkzeugs an einer Arbeitsmaschine
Dispositif de couplage avec verrouillage semi-automatique pour le couplage amovible d'un outil a un engin de travail

(30) Priority: 09.10.2007 DE 102007048334
(43) Date of publication of application: 15.04.2009
(73) Proprietor: AGCO GmbH, 87616 Marktoberdorf (DE)
(72) Inventor: Knobloch, Jürgen, 87674 Ruderatshofen (DE); Kapfer, Johannes, 87616 Marktoberdorf (DE); Wibmer, Josef, 87616 Marktoberdorf (DE)
(74) Representative: Morrall, Roger

(56) References cited:
- AT-B- 307 990
- DE-U1-202006 007 042
- FR-A1- 2 747 137
- FR-A1- 2 830 166
- US-A1- 2005 111 953

## Description

The present invention relates to a coupling device for the detachable coupling of a working device, in particular of a front loader, on a utility vehicle, in particular on an agricultural tractor in accordance with the preamble of Claim 1.

Such a device is known, for example, from DE 32 29 947 A1. This discloses a looking device which serves to couple a front loader rocker arm to a tractor. In this situation, a first mounting part is secured to a tractor, and a second mounting part is coupled to the front loader rocker arm. By means of open coupling jaws and hook-shaped jaws which cooperate with bearing pins, the two mounting parts are coupled to one another by relative pivoting. A locking device is provided in the form of a locking block, which has flattened surfaces which are adapted to co-operate with the hook-shaped jaws under the action of a spring element to look the mounting parts together. A hand lever is provided, by means of which the locking block can be moved to an unlocked position. The locking block can be moved to its locking position by the engagement of the hand lever with a corresponding engagement projection carried by the loader rocker arm.

In addition, a front loader is known from DE 36 30 976 A1 which can be coupled by means of spar ends of its loader rocker arms to mounting brackets on a tractor. A locking device in the form of a latch is subjected to pre-tension into a locked position by a locking spring. An actuation lever is provided to unlock the latch, which is fitted with a slotted plate, which has a guide slot into which a bolt of the latch engages. By means of this mechanism the latch can be moved by actuating the actuation lever into an unlocked position. By means of a special design of the guide slot, the latch is fixed in the unlocked position.

DE 20 2006007 02 discloses a detachable device for connecting a front loader to a tractor. The device is provided with connection means for connecting the device to the tractor and for connecting the frontloader to the device. The device is not provided with a security means so that an external force acting on the connection means could result in the frootloader being detached from the device.

Finally, from EP 1 528 164 A I a device is disclosed for the detachable coupling of a working device, in particular a loader rocker arm, to a carrier vehicle. A locking arrangement is provided in this case between the loader rocker arm and a mount-on bracket of a carrier vehicle, which consists of a moveable bolt element which is arranged on a carrier bracket of the working device (the loader rocker arm), and which acts on a stop on the carrying bracket of the carrying vehicle, such that the carrying bracket of the working device and the carrying vehicle can be locked to one another. In this arrangement, an actuating lever is spring biased into a position in which the bolt element locks the working device to the carrying vehicle. An engagement device is also provided, by means of which the bolt element, after the release of the device, is held in its unlocked position against the effect of the spring biasing, this engagement device being release when that the carrying brackets of the working device and of the carrying vehicle are brought into contact with one another.

The object of the present invention is to provide a securing device which reliably prevents unintentional unlocking of the locking device or unintentional raising of the working device from the utility vehicle. This is intended to be associated with easy handling, such that the locking or unlocking and coupling and uncoupling respectively of the working device and of the utility vehicle can be carried out in an easy manner. In addition, the unlocked position can be adopted again immediately after the uncoupling, in order to be ready for the next coupling procedure.

This object is resolved with the features according to Claim 1. Further advantageous embodiments of the invention are the subject matter of the sub-claims.

According to the invention, an additional securing element is provided, by means of which an unintentional unlocking of the locking element can be prevented. At the same time, by the intentional actuating of an actuation element, the locking element can be moved together with the securing element into the unlocked position, without a separate uncoupling, of the securing element being required. As a result, a type of semi-automatic arrangement is produced, such that, after uncoupling, the locking device again passes into a state in which it is ready for the next coupling procedure. Further, the kinematic arrangement according to the invention makes the situation easier, in that by the actuating of a single actuation element both the locking element passes into an unlocked position and the securing element passes, beforehand or simultaneously, out of a locked position into an unlocked position.

In the locked position, the locking element is located advantageously in a position in which a locking surface is in contact with a locking contour of the utility vehicle coupling bracket, such that a movement against the relative coupling movement between the working device coupling bracket and the utility vehicle coupling bracket is prevented by a positive fit connection.

As, in the present invention, major components are put into effect by the outer contours of the working device coupling bracket and the utility vehicle coupling bracket, only a small number of components is required, which leads to reductions in manufacturing costs.

One embodiment of the present invention will now be described, by way of example only, with reference to the accompanying drawings in which:-
Fig. 1 shows an agricultural utility vehicle with a mount-on front loader;
Fig. 2a shows a perspective representation of a mount-on bracket and a coupling tower in the coupled state;
Fig. 2b shows the coupling tower in a side view, wherein a carrier part has been omitted for easier illustration;
Fig. 2c shows a perspective view of the major components of the coupling tower;
Fig. 3 shows a section of the coupling tower in a side view;
Figures 4 to 9 show the kinematics of the locking arrangement showing part of the coupling tower in a side view in different pivot positions;
Fig. 10 shows a side view of the coupling procedure of the coupling tower and a part of the mount-on bracket;
Fig. 11 shows the coupled situation from Fig. 10;
Fig. 12 shows a perspective view the mount-on bracket;
Figs. 13a, b, and c show an individual component of the coupling tower in a front, side, and overhead view;
Fig. 14 shows the individual component of the coupling tower in a perspective view;
Figs. 15 and 16 show part sections with a securing element and a securing contour shortly before the position in which the highest position is attained in relation to the mount-on bracket, and
Figs. 17 and 18 show the part sections from Figs. 15 and 16 in a final position.

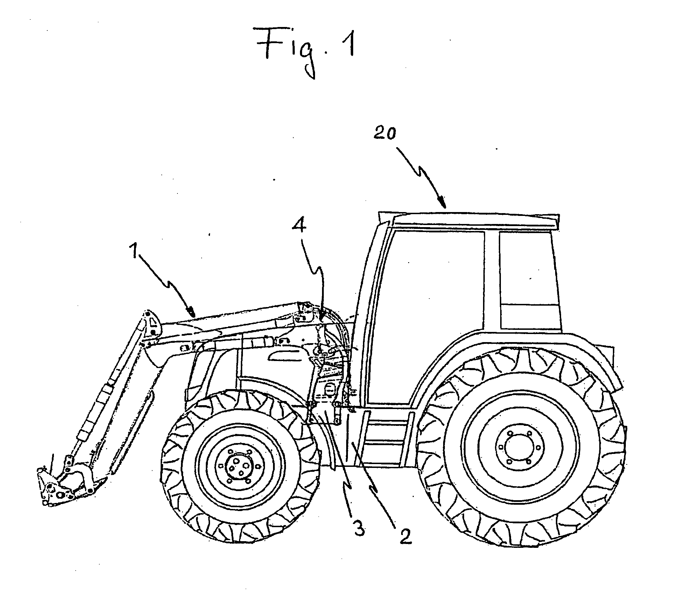

The present embodiment example relates, according to Fig. 1, to a tractor 20, which is intended to be coupled to a front loader rocker arm 1. The front loader rocker arm 1 is secured by means of a coupling device 4 to a coupling device 3 on the tractor. The coupling device 3 is secured firmly to the vehicle or to a vehicle frame 2 of the vehicle. The coupling device on the front loader 1, referred to hereinafter as the coupling tower 4, when coupled to the vehicle, is mechanically connected to the coupling device of the vehicle, referred to hereinafter as the mount-on bracket 3.

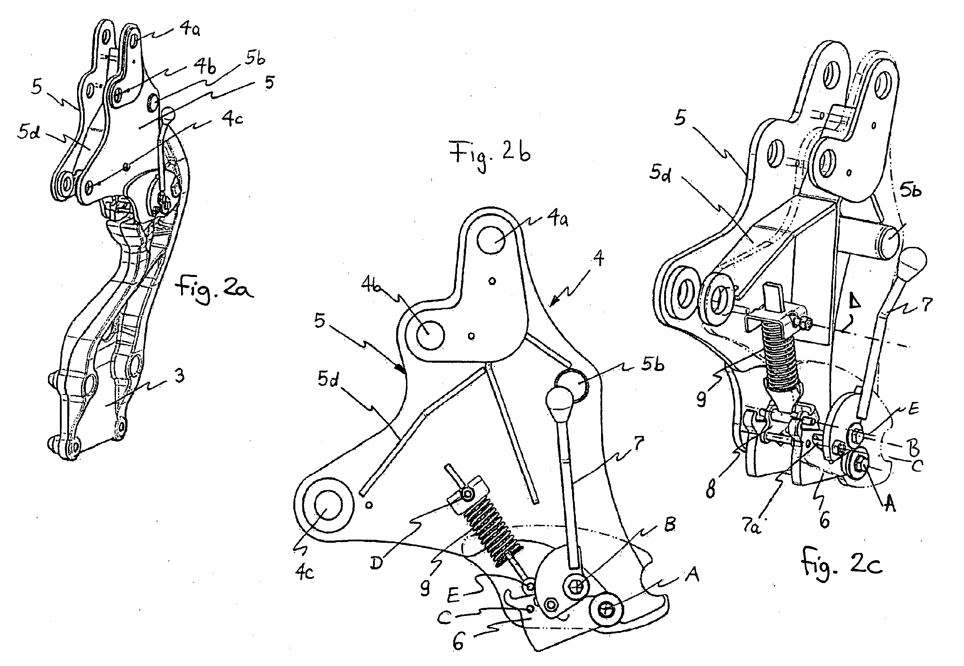

Fig. 2 shows the two components in the coupled position. For simpler illustration, the remainder of the front loader rocker arm 1 has been omitted. This would be connected to the left side, in Fig. 2a, of the coupling tower 4, wherein the individual components are securely connected by bolts, which are guided through the holes 4a to 4c which can be identified there.

The coupling tower 4 has two carrier parts 5 (see Fig. 2a), which are designed as identical and are held at a predetermined distance from one another by a spacer plate 5d, such as can be seen for example in Fig. 2c. For a more stable connection of the two carrier parts 5, the spacer plate 5d is designed essentially in the form of an inverted Y. The two carrier parts 5 can be welded to one another by means of the spacer plate 5d. Inside the two carrier parts 5 are further components which are provided for locking the front loader to the vehicle. In particular, a mounting bolt 5b is provided, which is mounted in two holes coaxial to one another, provided in the carrier parts 5. The function of the mounting bolts 5b will be described later. Further, in the lower region of the carrier parts 5 holes are provided, aligned in each case coaxially to one another, which form a rotation axis A (see Fig. 2b, c), the function of which is described below.

As can be seen from Figs. 2b and 2c, two curved discs are provided, aligned parallel to one another, which serve as locking elements 6, described later, in the form of contoured plates. The two locking elements 6 are mounted so as to be rotatable about the axis A, as can be seen from Fig. 2b. The axis A is provided by a bolt, which is mounted in holes in the carrier parts 5.

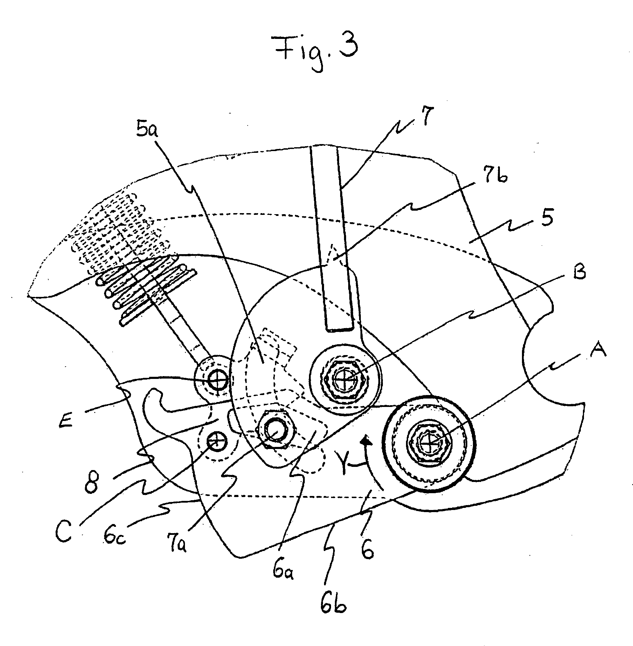

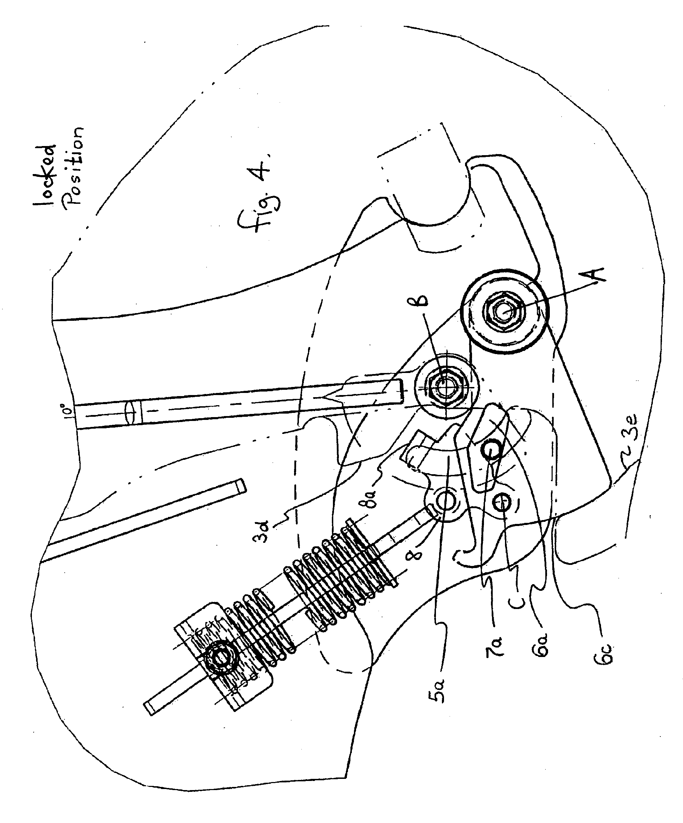

The locking element 6 has a passage aperture 6a, which can be seen, for example, in Fig. 3 as well as in Figures 4 to 11. The passage aperture is formed as a type of elongated slot. The locking element 6 in the present embodiment example is designed as a curved disc in the form of a segment of a circle. In this situation the circle-segment-related outer circumference section of the circle segment corresponds to the outer radius of a circle. According to a further embodiment, however, the outer circumference can also have a changing curvature, in order, for example, to strengthen the clamping effect with the mount-on bracket, as described later.

Further, a hand lever 7 is provided in the carrier part 5, which is mounted such as to rotate about an axle B (see Fig. 2b, c). The hand lever 7 is provided at its end opposite the handle with a sheet metal segment, on which a carrier bolt 7a is located, which extends perpendicular to this (see Figs. 2c, 4-9). In addition to this, a curved longitudinal hole 5a is provided in the carrier part 5, which lies within a radius about an axle B as the circle centre point (see Fig. 3). As a result, the carrier bolt 7a secured to the hand lever 7, which extends through the passage aperture 6a in the locking element 6 and through the longitudinal hole 5a of the carrier part 5, can be pivoted along the longitudinal hole 5a on a circular path about the axle B together with the hand lever 7. The passage aperture 6a in this situation has an aperture width which is greater than the diameter of the carrier bolt 7a.

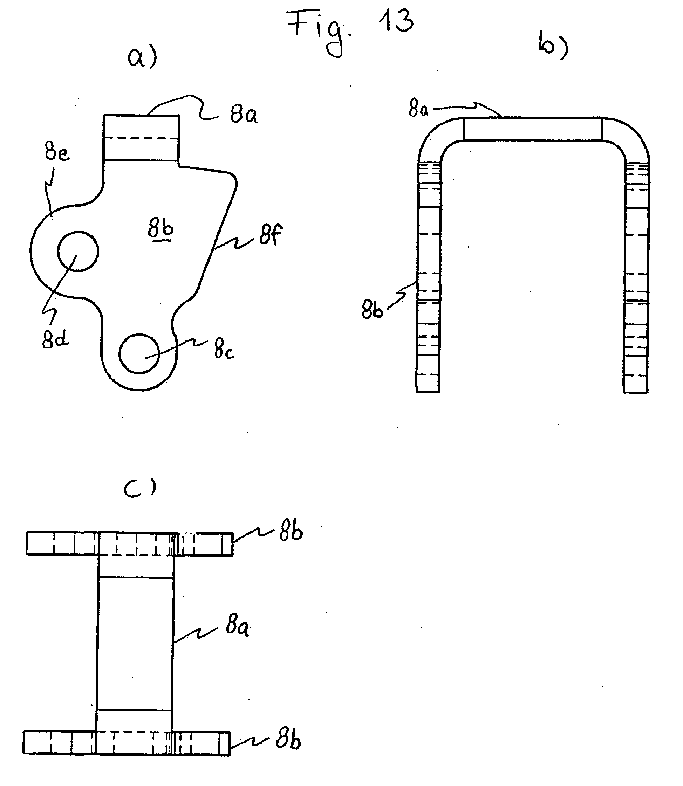

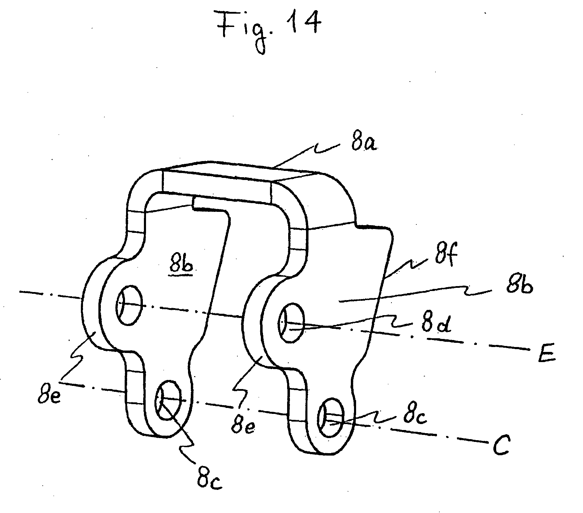

Further, a securing element 8 is provided, such as can be seen, for example, in Fig. 2c, and in particular as an individual component in Figs. 13 and 14. In this situation, this is a contoured sheet, which is mounted so as to rotate about an axle C provided in the locking element 6 (see Figs. 3-9).

According to Figs. 13 and 14, the securing element 8 in the present embodiment example is shaped as a bar in the form of an inverted U. It consists of a middle part 8a, connected to which are two limbs 8b, angled essentially at right angles downwards in Figs. 13b and 14 respectively. Provided at the free end of the limbs 8b in each case is a hole 8c. Both holes 8c are aligned coaxially to one another. The mid-point of the two holes 8c lies on and defines an axis of rotation C (see Fig. 14), the function of which will be described later. Formed approximately in the middle of the limbs 8b is a type of lug 8e, in which in each case a further hole 8d is provided. Both holes 8d are likewise aligned coaxially to one another. The mid-point of the two holes 8d lies on and defines the axis of rotation E, the function of which is described later (see Fig. 14). Finally, a contour 8f is provided on the edge side opposite the lug 8e (see Fig. 13a). The securing element 8 is arranged in such a way, and contoured in such a way, that it is in contact tangentially with its contour 8f on the carrier bolt 7a (see Figs. 4-9). The interaction of the contour 8f and the carrier bolt 7a is described later.

According to Figs. 2b and 2c, a tensioning spring assembly 9 is mounted on the carrier part 5. The tensioning spring assembly 9 is mounted at one end such as to be rotatable about an axle D in the carrier part 5, and, in addition, is mounted at the other end such as to be rotatable about the axle E in the securing element 8.

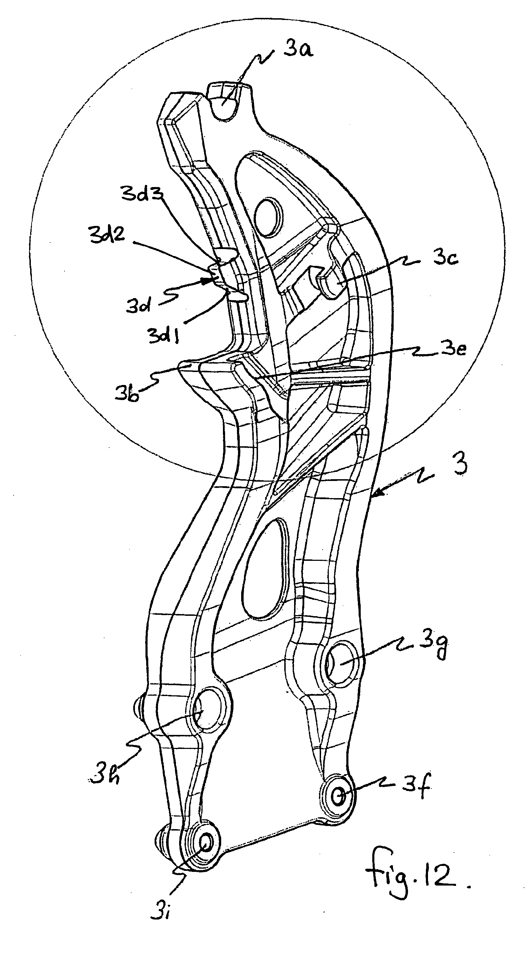

The mount-on bracket 3 is explained hereinafter in greater detail by reference to Fig. 12. To secure the front loader, two mount-on brackets are provided, which in each case are located on one side of the vehicle. These are solid cast components, connected to the vehicle frame 2 by securing eyes 3 f, g, h and i. The mount-on bracket extends essentially perpendicular upwards and is designed in the upper third as curved in the direction of travel (see Fig. 1). Located at the upper end of the main body is a semicircular cut-out aperture 3a (see Fig. 12). Provided on the outer contour are a securing contour 3d, a run-on contour 3b, a locking contour 3e, as well as a lower stop surface 3c, the functions of which are described in detail later. The securing contour 3d has a contact surface 3dlrunning obliquely from below in Fig. 12. The oblique contact surface 3d1 merges into a straight part 3d2. Connected to the straight part, running at approximately a right angle is a shoulder part 3d3, which leads the securing contour 3d back again into the main body of the mount-on bracket 3.

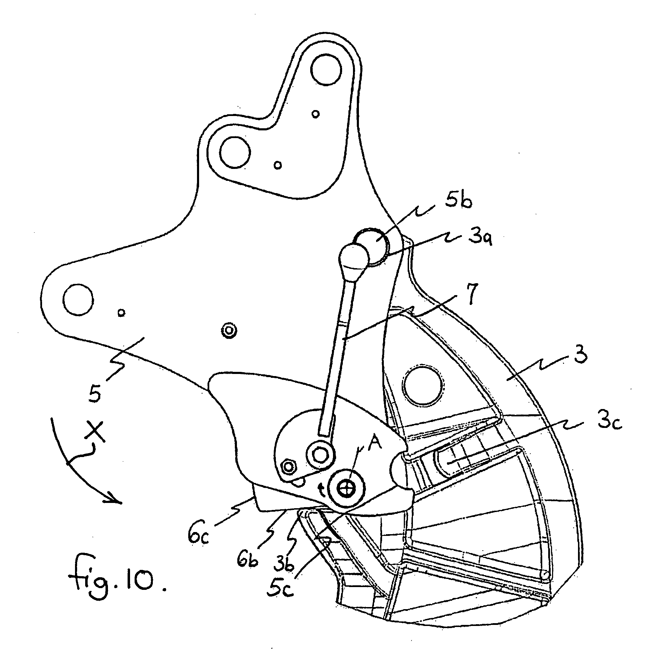

The coupling procedure is explained hereinafter: To couple up the front loader 1, the coupling tower 4 is pivoted by means of the front loader's own hydraulics system, as can be seen in Fig. 10. On a vehicle with a height adjustable front axle, the front axle suspension is set to the lowest position, such that the front part of the vehicle and therefore the mount-on bracket 3 are lowered towards the front. In the lowered state, the vehicle is moved, in the coupling position, into the mount-on bracket. The upper mounting bolt 5b of the carrier part 5 in this situation is centred and suspended in the cut-out aperture 3a in the mount-on bracket 3. The coupling tower 4 is then pivoted back in the direction of arrow X by means of the front loader's own hydraulics system. This means that the lower section of the coupling tower is in this situation rotated in the direction of the mount-on bracket, such that the coupling element 5c in the form of a cut-out aperture passes into engagement onto the projecting coupling element or lower stop 3c of the mount-on bracket 3.

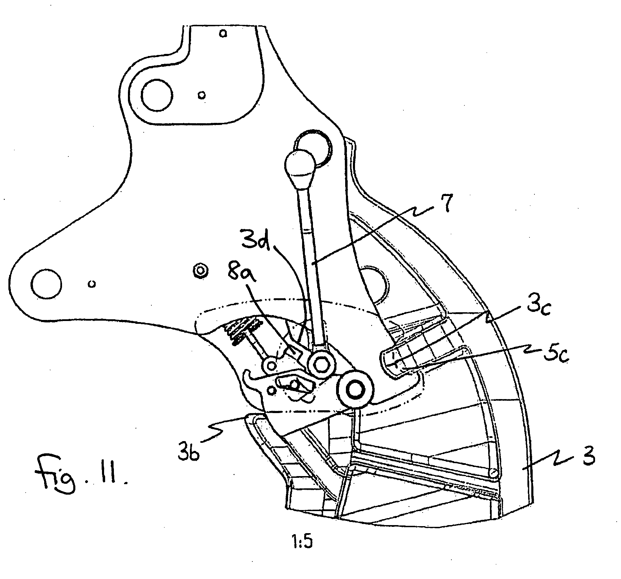

The locking procedure is explained hereinafter: Due to the run-on contour 3b in the mount-on bracket 3, during the coupling procedure the locking element 6 is pivoted upwards anti-clockwise about the axle A, against the spring force of the tensioning spring assembly 9 (see Figs. 3, 10, in particular the arrow Y). In accordance with their interconnection, the other parts are also pivoted in sympathy. For this purpose reference is made in particular to Fig. 3. In the end position, i.e. in the locked state (see Fig. 11), the locking element 6 is again pressed downwards by the spring force of the tensioning spring assembly 9, and pivoted in the anti-clockwise direction against the direction of the arrow Y about the axle A. In this situation, a locking surface 6c comes in contact with a locking contour 3e of the mount-on bracket. Further, the lower contact surface 3c of the mount-on bracket 3 comes in contact with the corresponding contour 5c of the carrier part 5, as has already been indicated above. The locking procedure can be appreciated by means of Figures 10 and 11. In Figure 10, locking has not yet taken place. It can be seen that when the carrier parts 5 are pivoted into the mount-on bracket 3, the run-on contour 6b of the locking element 6 slides along the run-on contour 3b of the mount-on bracket, so that the tensioning spring assembly 9 is compressed. This sets the locking element 6 under preliminary tension. At the moment at which the locking element 6 has reached a position in which it has passed by the run-on contour 3b, the locking element 6 can again pivot downwards, since the run-on contour 3b has only a limited wall thickness, as can be seen in particular in Fig. 12. Due to the spring force of the spring assembly 9, the locking element 6 is pressed downwards, such that the locking surface 6c of the locking element 6 comes in contact with the locking contour 3e of the mount-on bracket 3, and the two parts lock with one another. Due to the spring force, the coupling position is set in the "locked" position, free of play, as represented in Fig. 4.

In order to prevent the possibility of an outside influence from beneath exerted on the locking element 6 causing unintentional release, the securing element 8 is provided, which, when the coupling tower is raised at the securing contour 3d, comes in contact with the mount-on bracket 3, and so prevents raising. This can best be seen in Fig. 11. In the "locked" position represented there, the middle part 8a of the securing element 8 is located opposite the securing contour 3d of the mount-on bracket 3. If due to the outside influence of the locking element 6 there were to be a movement upwards, due for example to the front loader 1 being raised upwards, the middle part 8a of the securing element 8 would come in contact with the securing contour 3d of the mount-on bracket 3 and prevent any further movement.

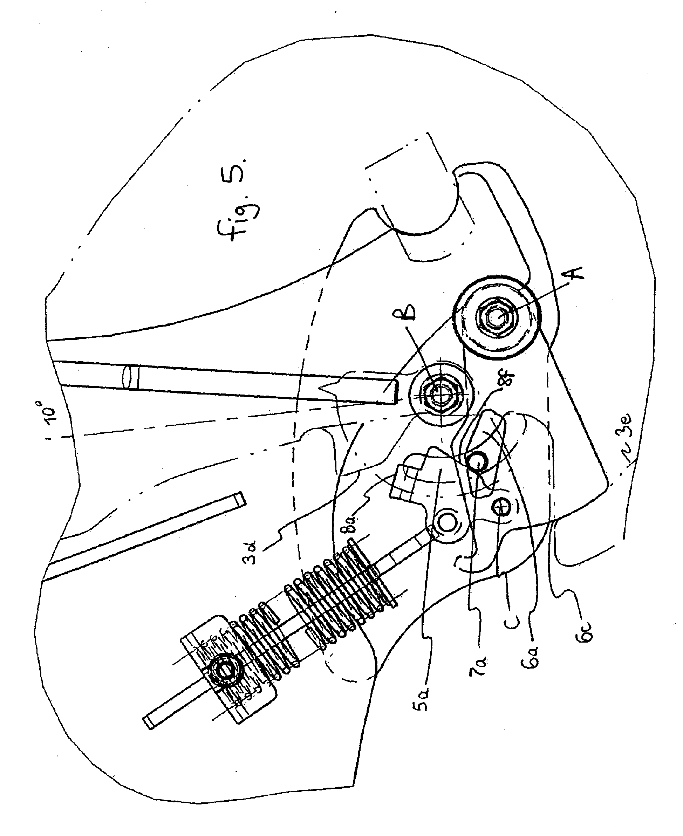

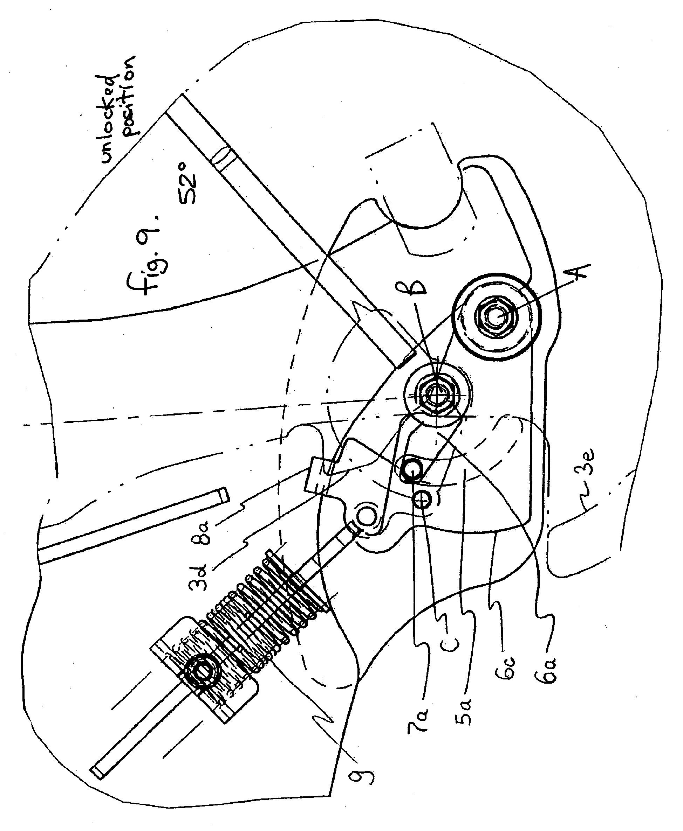

The unlocking procedure is described hereinafter with reference to Figs. 4-9. Unlocking takes place by the hand lever 7 being pivoted out of the locking position into the unlocking position. The locking position is represented in Fig. 4. The unlocking position is represented in Fig. 9. Figures 5 to 8 show the individual lever positions in the different angle stages. If the lever 7 is pivoted, the drive force connections, as already described, cause the components of the locking arrangement likewise to pivot and move.

A point to be particularly emphasised in this situation is that the securing element 8 is moved in such a way that it is not blocked by the securing contour 3d of the mount-on bracket 3 but is firstly pivoted away out of this region and is then moved upwards. At the upper end of the securing contour 3d, the securing element 8 is then again pivoted by the spring force in such a way that the securing element 8 remains in the "unlocked" position (see Fig. 9) even after the hand lever has been released and the front loader can again be coupled up.

The kinematic arrangements of the individual components are explained below.

In Fig. 4, the "locked" position is represented. In this position the carrier bolt 7a in the passage aperture 6a is in its lowest position. Due to the spring force of the tensioning spring assembly 9, the securing element 8 is pressed about the rotation axle C against the carrier bolt 7a. As already indicated, the rotation axle C is provided in the locking element 6. That is to say, upon a rotation of the locking element 6 in the clockwise direction, the rotation axle C likewise moves upwards on a circular trajectory about the rotation axle A of the locking element 6. In consequence, the securing element 8, which is joint-connected at the rotation axle C to the locking element 6, also moves in a coupled movement. In the "locked" position shown in Fig. 4, the securing element 8 is located with its middle part 8a opposite the securing contour 3d of the mount-on bracket 3. To better understand, for the mount-on bracket 3 only the securing contour 3d is shown as a line.

In Fig. 5 a position is represented in which the hand lever 7 has been pivoted by 10° in a clockwise direction. In this position, the carrier bolt 7a is no longer in its lowest position in the passage aperture 6a, but is now in its uppermost position. The locking element 6 in this situation has not yet moved. The securing element 8 has, however, already rotated somewhat anti-clockwise about the axle C, against the spring force of the tensioning spring assembly 9. The reason for this is that, due to the spring pre-tension, the securing element with its contour 8f is constantly in contact with the carrier bolt 7a. Due to the movement of the carrier bolt 7a and contact with the contour 8f, the securing element 8 can as a consequence be easily pivoted. Although the middle part 8a of the securing element 8 is still located opposite the securing contour 3d of the mount-on bracket 3, in the figure it is already pivoted somewhat further to the left.

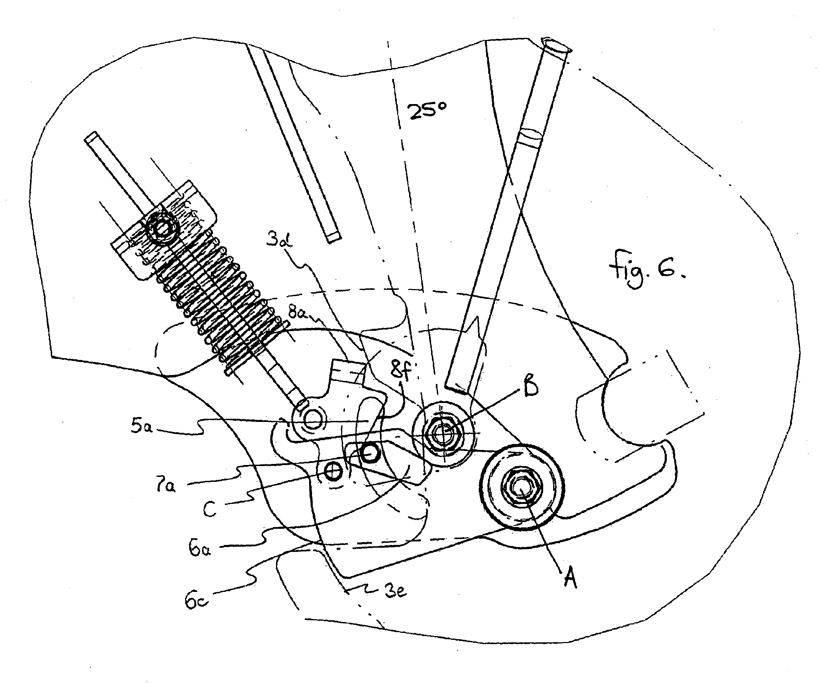

In Fig. 6 a position is represented in which the actuating lever 7 has been pivoted by 25° in a clockwise direction. In this position, the carrier bolt 7a moves further upwards, in a circular trajectory about the axle B. In this position the locking element 6 is already somewhat raised. The securing element 8 continues to be in the position pivoted to the left in the anticlockwise direction. However, with the movement of the locking element 6, the rotation axle C is simultaneously raised and pivoted, such that the securing element 8 joint-connected to the rotation axle C is also raised. It can now be seen that the securing element is already pivoted so far that it is moved past the securing contour 3d.

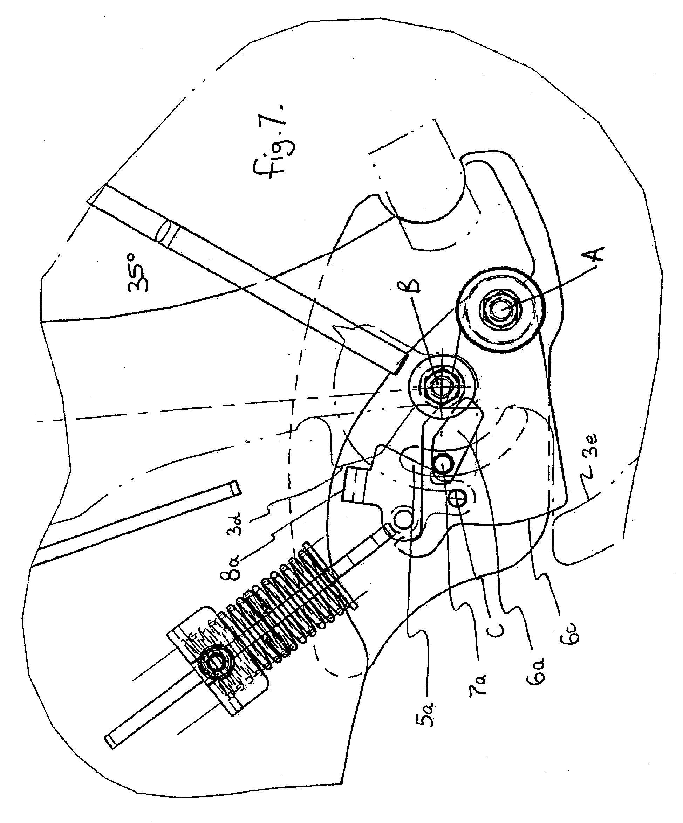

In Fig. 7 a position is represented in which the actuation lever 7 has been pivoted by 35° in the clockwise direction. In this position, the locking element 6 is further raised. The securing element 8 is still in the position pivoted to the left, anti-clockwise, and has likewise been raised still further.

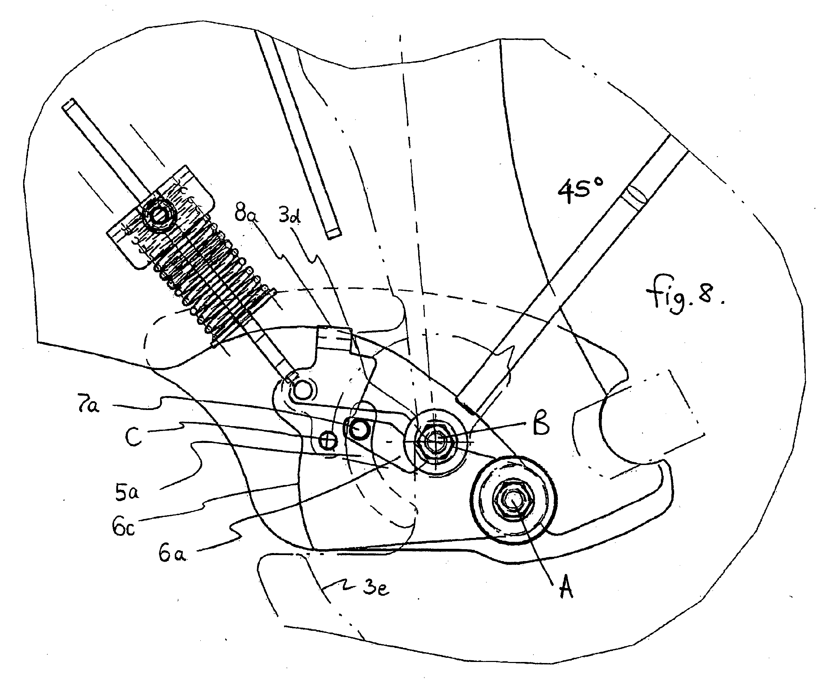

In Fig. 8 a position is represented in which the actuation lever 7 has been pivoted by 45° in the clockwise direction. In this position the locking element 6 is raised sufficiently far that the locking surface 6c is no longer in contact with the locking contour 3e. This means that an unlocked state already exists. The middle part 8a of the securing element 8 is located in its highest position, i.e. the bar part formed by the middle part 8a is in the position shortly before it snaps over the securing contour 3d.

Represented in Fig. 9 is the final "unlocked" state. The locking element 6 is in this case pivoted entirely upwards. The carrier bolt 7a is located in the uppermost position. By way of the contour 8f of the securing element 8, the carrier bolt 7a now lies in a cut-out aperture and fixes the securing element 8 in this position. In this position the bar of the middle part 8a snaps over the securing contour 3d and holds the position against the spring force of the spring assembly 9 which in this position is compressed to a maximum.

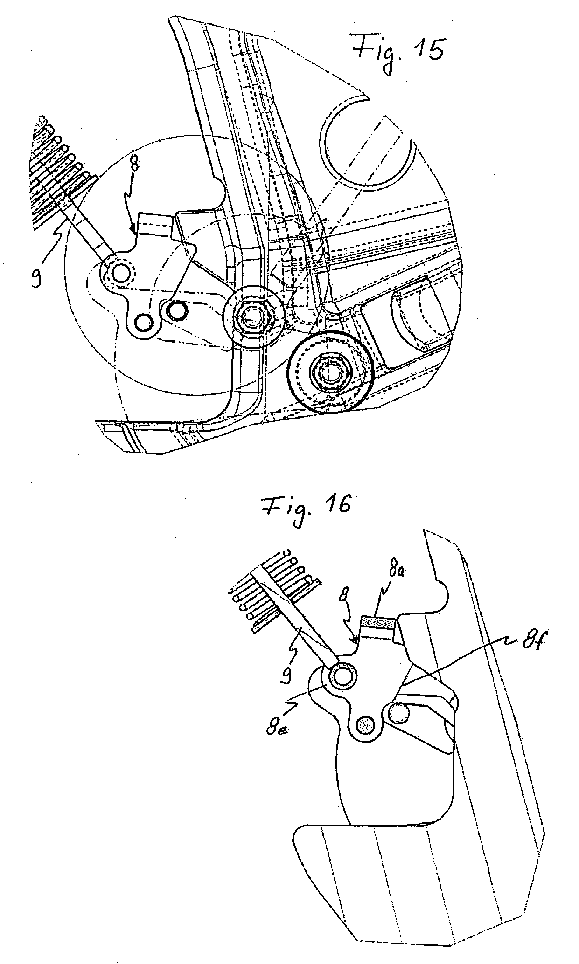

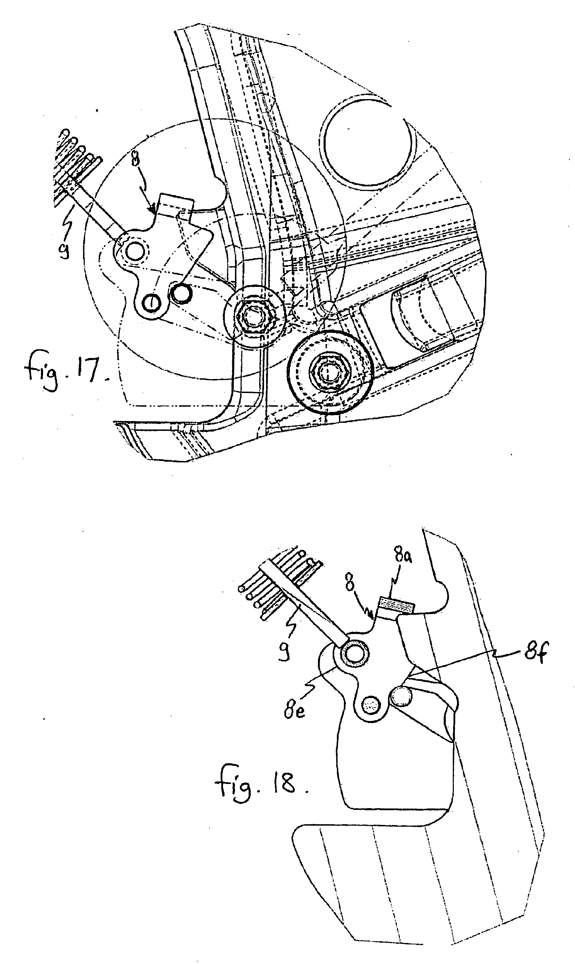

The positions of the securing element 8 are shown more precisely in Figs. 15 to 18. In Figs. 15 and 16 a situation is represented in which the securing element 8 is shortly before the position in which it attains the highest position in relation to the mount-on bracket 3. The middle part 8a of the securing element 8, forming the bar, is still in contact with the oblique surface of the securing contour 3d. Figs. 17 and 18 then show the end position in which the middle part 8a of the bar of the securing element 8 has moved out over the highest position of the securing contour 8d. Due to the spring force of the tensioning spring assembly 9, the bar is "hooked" into the securing contour 3d, such that the securing element remains in this position.

### The uncoupling procedure will be explained next:

The uncoupling procedure is carried out in the reverse sequence. As soon as the coupling tower 4 with its locking element 6 is pivoted out of the region of the securing contour 3d and is no longer in contact, the locking device by means of the spring force of the tensioning spring assembly 9 is brought into the "locked" position (see Fig. 4). From this position the front loader 1 can be coupled on again.
The hand lever 7 is provided with a display device 7b in the form of a pointer, in order to indicate to the operator the function of the position which has been set. To do this, a scale, not represented, is fixed to the carrier part 5, which defines the two positions "locked" and "unlocked" by the pointer position.

## Claims

1. A coupling device for detachably coupling a working device (1), in particular a front loader to a utility vehicle (20), said coupling device comprising:
- a working device coupling bracket (4) connectable to the working device (1), and
- a utility vehicle coupling bracket (3) connectable to the utility vehicle (20),
- working device coupling element means (5b, 5c) provided on the working device coupling bracket (4), and
- utility vehicle coupling element means (3a, 3c) provided on the utility vehicle coupling bracket (3),
- wherein said coupling element means are coupled together by means of a relative coupling movement between the working device coupling bracket (4) and utility vehicle coupling bracket (3)
wherein at least one locking element (6) is movably located on the working device coupling bracket (4) and is pre-tensioned into a locked position so that a relative movement between the working device coupling bracket (4) and the utility vehicle coupling bracket (3) in a direction opposite to the relative coupling movement is prevented, said locking element moveable into an unlocked position by actuation of an actuation element (7),
and said coupling device being **characterised by** a securing element (8) which is pre-tensioned into a securing position and is coupled to the locking element (6) in such a way that when an external force is applied to the locking element (6) to move it towards an unlocked position, the securing element (8) contacts the utility vehicle coupling bracket (3) to prevent further movement of the locking element (6) towards the unlocked position and
- wherein said actuation element (7) is coupled in such a way to the locking element (6) and the securing element (8) that, when the actuation element (7) is moved out of the securing position, the locking element (6) is moved together with the securing element (8) into the unlocked position.

2. A coupling device according to Claim 1, **characterised in that**
- first coupling element means (5b,3a) on the working device coupling bracket (4) and the utility vehicle coupling bracket (3) can be coupled by a first essentially linear relative coupling movement between the coupling brackets, and **in that**
- second coupling element means (5c,3c) on the coupling brackets (4,3) can be coupled by a second relative pivoting coupling movement between coupling brackets (4,3) about a pivot axis which lies in the region of the first coupled coupling element means (5b,3a), and
- wherein the locking element (6) in the locked position prevents a relative. movement between the coupling brackets (4,3) in a direction opposite to the second relative coupling movement.

3. A coupling device according to Claim 1 or 2, **characterised in that** the utility vehicle coupling element means comprises
- a first upwardly open cut-out (3a) and second cut-out apertures (3c) on both sides of the utility vehicle coupling bracket (3) which are opened towards the working device coupling element means,
- **in that** the working device coupling element means comprises a mounting bolt (5b) adapted to be received in the first upwardly open cut-out aperture (3a) and formations (5c) on the working device coupling element bracket (4) designed for engagement with the second cut-out apertures (3c).

4. A coupling device according to any one of the preceding claims, **characterised in that** the locking element (6) is on the working device coupling bracket (4) for pivoting about a first axis (A).

5. A coupling device according to Claim 4, **characterised in that** the securing element (8) is connected to the locking element (6) in a manner such as to be capable of pivoting about a securing element axis (C) which is parallel and displaced from to the first axis (A).

6. A coupling device according to Claim 5, **characterised in that** the locking element (6) has a run-on contour (6b) and the utility vehicle coupling bracket (3) has a corresponding run-on contour (3b) wherein the locking element (6) during the second relative coupling movement is moved by mutual contact of the two run-on contours (3b, 6b) into the unlocked position and **in that** the locking element (6) after completion of the second relative coupling movement is moved by pre-tension into the locked position in which a locking surface (6c) of the locking element (6) and a locking contour (3e) of the utility vehicle coupling bracket (3) are in contact with one another.

7. A coupling device according to any one of Claims 4 to 6, **characterised in that** the actuation element (7) is mounted on the working device coupling bracket (3) so as to be pivotable about an actuation element axis (B) and is provided with a bolt (7a) which can be moved together with the actuation element in a trajectory about the actuation element axis (B) and which extends through a passage aperture (6a) provided in the locking element (6), wherein the passage aperture (6a) is offset relative to the first axis (A) and at least in the direction of the movement of the bolt (7a), is larger than a diameter of the bolt (7a).

8. A coupling device according to Claim 7, **characterised in that** the securing element (8) is pre-tensioned into the securing position and the locking element (6) is pre-tensioned into the locked position by a tensioning element (9), which acts between the working device coupling element (4) and the securing element (8) at a point offset relative to the securing element axis (C).

9. A coupling device according to Claim 8, **characterised in that** the securing element (8) is pre-tensioned by the tensioning element in contact with the bolt (7a) of the actuation element (7).

10. A coupling device according to any one of Claims 7 to 9, **characterised in that** the actuation element (7) has an actuation lever for the pivoting of the actuation element and a plate, by means of which the bolt (7a) is connected to the actuation lever.

11. A coupling device according to any one of the preceding claims, **characterised in that**, in an unlocking end position of the actuation element (7) in which the locking element (6) is unlocked, the securing element (8) due to the pre-tensioning, is held in engagement with a section of the utility vehicle coupling bracket (3).

12. A utility vehicle, in particular an agricultural tractor with a working device connected therewith by a coupling device according to any one of the preceding claims.

13. Agricultural tractor with a front loader connected therewith by two coupling devices, according to any one of Claims 1 to 11, which are arranged on both sides of the agricultural tractor in the region between a front axle and a driver's cab of the agricultural tractor, and which in each case couple an arm of the front loader to the agricultural tractor.

## Patentansprüche

1. Kopplungsvorrichtung zum lösbaren Koppeln eines Arbeitsgeräts (1), insbesondere eines Frontladers, an ein Nutzfahrzeug (20), wobei die Kopplungsvorrichtung aufweist:
- eine mit dem Arbeitsgerät (1) verbindbare Arbeitsgerät-Kopplungskonsole (4),
- eine mit dem Nutzfahrzeug (20) verbindbare Nutzfahrzeug-Kopplungskonsole (3),
- ein Kopplungsorgan (5b, 5c) für das Arbeitsgerät, das an der Arbeitsgerät-Kopplungskonsole (4) vorgesehen ist, und
- ein Kopplungsorgan (3a, 3c) für das Nutzfahrzeug, das an der Nutzfahrzeug-Kopplungskonsole (3) vorgesehen ist,
- wobei die Kopplungsorgane durch eine relative Kopplungsbewegung zwischen der Arbeitsgerät-Kopplungskonsole (4) und der Nutzfahrzeug-Kopplungskonsole (3) miteinander gekoppelt sind oder werden,
wobei mindestens ein Verriegelungselement (6) bewegbar an der Arbeitsgerät-Kopplungskonsole (4) angeordnet ist und derart in eine verriegelte Stellung vorgespannt ist, dass eine Relativbewegung zwischen der Arbeitsgerät-Kopplungskonsole (4) und der Nutzfahrzeug-Kopplungskonsole (3) in einer Richtung entgegengesetzt zu der relativen Kopplungsbewegung verhindert ist, wobei das Verriegelungselement durch Betätigung eines Betätigungselements (7) in eine entriegelte Stellung bewegbar ist,
und wobei die Kopplungsvorrichtung **gekennzeichnet ist durch** ein Sicherungselement (8), das in eine Sicherungsstellung vorgespannt ist und derart mit dem Verriegelungselement (6) gekoppelt ist, dass, wenn eine äußere Kraft auf das Verriegelungselement (6) ausgeübt wird, um dieses in Richtung einer entriegelten Stellung zu bewegen, das Sicherungselement (8) die Nutzfahrzeug-Kopplungskonsole (3) kontaktiert, um eine weitere Bewegung des Verriegelungselements (6) in Richtung der entriegelten Stellung zu verhindern, und
wobei das Betätigungselement (7) derart mit dem Verriegelungselement (6) und dem Sicherungselement (8) gekoppelt ist, dass das Verriegelungselement (6) zusammen mit dem Sicherungselement (8) in die entriegelte Stellung bewegt wird, wenn das Betätigungselement (7) aus Sicherungsstellung bewegt wird.

2. Kopplungsvorrichtung nach Anspruch 1, **dadurch gekennzeichnet, dass**
- erste Kopplungsorgane (5b, 3a) an der Arbeitsgerät-Kopplungskonsole (4) und an der Nutzfahrzeug-Kopplungskonsole (3) durch eine erste im Wesentlichen lineare relative Kopplungsbewegung zwischen den Kopplungskonsolen koppelbar sind und dass
- zweite Kopplungsorgane (5c, 3c) an den Kopplungskonsolen (4, 3) durch eine zweite relative Schwenkkopplungsbewegung zwischen den Kopplungskonsolen (4, 3) um eine Schwenkachse, die im Bereich der ersten gekoppelten Kopplungsorgane (5b, 3a) liegt, koppelbar sind,
- wobei das Verriegelungselement (6) in der verriegelten Stellung eine Relativbewegung zwischen den Kopplungskonsolen (4, 3) in einer Richtung entgegengesetzt zu der zweiten relativen Kopplungsbewegung verhindert.

3. Kopplungsvorrichtung nach Anspruch 1 oder 2, **dadurch gekennzeichnet, dass** das Kopplungsorgan für das Nutzfahrzeug aufweist
- eine erste nach oben offene ausgeschnittene oder ausgesparte (3a) und eine zweite ausgeschnittene oder ausgesparte Öffnung (3c) auf beiden Seiten der Nutzfahrzeug-Kopplungskonsole (3), die in Richtung der Kopplungsorgane für das Arbeitsgerät offen sind,
- wobei das Kopplungsorgan für das Arbeitsgerät einen Montage- oder Befestigungsbolzen (5b), der geeignet zur Aufnahme in der ersten nach oben offenen ausgesparten oder ausgeschnittenen Öffnung (3a) gestaltet ist, und Ausbildungen (5c) an der Arbeitsgerät-Kopplungskonsole (4), die geeignet zum Eingreifen in zweiten ausgesparten oder ausgeschnittenen Öffnungen (3c) gestaltet sind, aufweist.

4. Kopplungsvorrichtung nach einem der vorhergehenden Ansprüche, **dadurch gekennzeichnet, dass** das Verriegelungselement (6) an der Arbeitsgerät-Kopplungskonsole (4) zum Verschwenken um eine erste Achse (A) vorgesehen oder angeordnet ist.

5. Kopplungsvorrichtung nach Anspruch 4, **dadurch gekennzeichnet, dass** das Sicherungselement (8) derart mit dem Verriegelungselement (6) verbunden ist, dass es um eine Sicherungselementachse (C) verschwenkbar ist, die parallel zu der ersten Achse (A) orientiert ist und versetzt zu dieser angeordnet ist.

6. Kopplungsvorrichtung nach Anspruch 5, **dadurch gekennzeichnet, dass** das Verriegelungselement (6) eine Anlaufkontur (6b) aufweist und die Nutzfahrzeug Kopplungskonsole (3) eine entsprechende Anlaufkontur (3b) aufweist, wobei das Verriegelungselement (6) während der zweiten relativen Kopplungsbewegung oder Schwenkkopplungsbewegung durch gegenseitigen Kontakt der beiden Anlaufkonturen (3b, 6b) in die entriegelte Stellung bewegt wird, und dass das Verriegelungselement (6) nach Vervollständigung der zweiten relativen Kopplungsbewegung oder Schwenkkopplungsbewegung durch Vorspannung in die verriegelte Stellung bewegt wird, in der eine Verriegelungsfläche (6c) des Verriegelungselements (6) und eine Verriegelungskontur (3e) der Nutzfahrzeug-Kopplungskonsole (3) miteinander in Kontakt stehen.

7. Kopplungsvorrichtung nach einem der Ansprüche 4 bis 6, **dadurch gekennzeichnet, dass** das Betätigungselement (7) derart an der Arbeitsgerät-Kopplungskonsole (3) montiert ist, dass dieses um eine Betätigungselementachse (B) verschwenkbar ist, und mit einem Bolzen (7a) versehen ist, der zusammen mit dem Betätigungselement entlang einer Trajektorie um die Betätigungselementachse (B) bewegt werden kann und der sich durch eine in dem Verriegelungselement (6) vorgesehene Durchgangsöffnung (6a) erstreckt, wobei die Durchgangsöffnung (6a) relativ zu der ersten Achse (A) versetzt ist und zumindest in Richtung der Bewegung des Bolzens (7a) größer als ein Durchmesser des Bolzens (7a) ist.

8. Kopplungsvorrichtung nach Anspruch 7, **dadurch gekennzeichnet, dass** das Sicherungselement (8) in die Sicherungsstellung vorgespannt ist und das Verriegelungselement (6) in die verriegelte Stellung vorgespannt ist durch ein spannendes Element (9), das an einem relativ zu der Sicherungselementachse (C) versetzten Punkt zwischen der Arbeitsgerät-Kopplungskonsole (4) und dem Sicherungselement (8) wirkt.

9. Kopplungsvorrichtung nach Anspruch 8, **dadurch gekennzeichnet, dass** das Sicherungselement (8) durch das spannende Element in Kontakt mit dem Bolzen (7a) des Betätigungselements (7) vorgespannt ist.

10. Kopplungsvorrichtung nach einem der Ansprüche 7 bis 9, **dadurch gekennzeichnet, dass** das Betätigungselement (7) einen Betätigungshebel zum Verschwenken des Betätigungselements und eine Platte, durch die der Bolzen (7a) mit dem Betätigungshebel verbunden ist, aufweist.

11. Kopplungsvorrichtung nach einem der vorhergehenden Ansprüche, **dadurch gekennzeichnet, dass** das Sicherungselement (8) in einer entriegelten Endstellung des Betätigungselements (7), in der das Verriegelungselement (6) entriegelt ist, aufgrund der Vorspannung in Eingriff mit einem Abschnitt der Nutzfahrzeug-Kopplungskonsole (3) gehalten ist.

12. Nutzfahrzeug, insbesondere landwirtschaftlicher Traktor oder landwirtschaftliches Zugfahrzeug, mit einem Arbeitsgerät, das mittels einer Kopplungsvorrichtung nach einem der vorhergehenden Ansprüche mit dem Nutzfahrzeug verbunden ist.

13. Landwirtschaftlicher Traktor oder landwirtschaftliches Zugfahrzeug mit einem Frontlader, der über zwei Kopplungsvorrichtungen nach einem der Ansprüche 1 bis 11 mit dem Traktor oder Zugfahrzeug verbunden ist, die auf beiden Seiten des Traktors oder Zugfahrzeugs im Bereich zwischen einer Vorderachse und einer Fahrerkabine des Traktors oder Zugfahrzeugs angeordnet sind und die jeweils einen Arm des Frontladers mit dem Traktor oder Zugfahrzeug koppeln.

## Revendications

1. Dispositif de couplage destiné à assurer le couplage amovible d'un dispositif fonctionnel (1), en particulier, un chargeur frontal, à un véhicule utilitaire (20), ledit dispositif de couplage comprenant :
une bride de couplage de dispositif fonctionnel (4) pouvant être raccordée au dispositif fonctionnel (1), et
une bride de couplage de véhicule utilitaire (3) pouvant être raccordée au véhicule utilitaire (20),
des moyens formant élément de couplage de dispositif fonctionnel (5b, 5c) agencés sur la bride de couplage de dispositif fonctionnel (4), et
des moyens formant élément de couplage de véhicule utilitaire (3a, 3c) agencés sur la bride de couplage de véhicule utilitaire (3),
dans lequel lesdits moyens formant élément de couplage sont couplés entre eux par l'intermédiaire d'un mouvement de couplage relatif entre la bride de couplage de dispositif fonctionnel (4) et la bride de couplage de véhicule utilitaire (3),
dans lequel, au moins un élément de verrouillage (6) est situé de manière à pouvoir se déplacer sur la bride de couplage de dispositif fonctionnel (4) et est préchargé dans une position verrouillée, de telle sorte qu'un mouvement relatif entre la bride de couplage de dispositif fonctionnel (4) et la bride de couplage de véhicule utilitaire (3) dans une direction opposée au mouvement de couplage relatif est empêché, ledit élément de verrouillage pouvant être déplacé vers une position déverrouillée par activation d'un élément d'activation (7),
et ledit dispositif de couplage étant **caractérisé par** un élément de fixation (8) qui est préchargé dans une position de fixation et est couplé à l'élément de verrouillage (6) de telle manière que, lorsqu'un effort externe est appliqué sur l'élément de verrouillage (6) afin de le déplacer vers une position déverrouillée, l'élément de fixation (8) entre en contact avec la bride de couplage de véhicule utilitaire (3) afin d'empêcher tout autre mouvement de l'élément de verrouillage (6) vers la position déverrouillée, et
dans lequel ledit élément d'activation (7) est couplé à l'élément de verrouillage (6) et l'élément de fixation (8) de telle manière que, lorsque l'élément d'activation (7) est déplacé à l'opposé de la position de fixation, l'élément de verrouillage (6) est déplacé ensemble avec l'élément de fixation (8) vers la position déverrouillée.

2. Dispositif de couplage selon la revendication 1, **caractérisé en ce que** :
des premiers moyens formant élément de couplage (5b, 3a) sur la bride de couplage de dispositif fonctionnel (4) et la bride de couplage de véhicule utilitaire (3) peuvent être couplés par un premier mouvement de couplage relatif sensiblement linéaire entre les brides de couplage, et **en ce que** :
des seconds moyens formant élément de couplage (5c, 3c) sur les brides de couplage (4, 3) peuvent être couplés par un second mouvement de couplage pivotant relatif entre les brides de couplage (4, 3) autour d'un axe de pivot situé dans la zone du premier moyen formant élément de couplage couplé (5b, 3a), et
dans lequel l'élément de verrouillage (6), dans la position verrouillée, empêche un mouvement relatif entre les brides de couplage (4, 3) suivant une direction opposée au second mouvement de couplage relatif.

3. Dispositif de couplage selon la revendication 1 ou 2, **caractérisé en ce que** le moyen formant élément de couplage de véhicule utilitaire comprend :
une première ouverture entaillée ouverte vers le haut (3a) et des secondes ouvertures entaillées (3c) des deux côtés de la bride de couplage de véhicule utilitaire (3) qui sont ouvertes vers le moyen formant élément de couplage de dispositif fonctionnel,
**en ce que** le moyen formant élément de couplage de dispositif fonctionnel comprend une vis de montage (5b) adaptée de manière à être reçue dans la première ouverture entaillée ouverte vers le haut (3a) et des cavités (5c) sur la bride formant élément de couplage de dispositif fonctionnel (4), conçues afin d'assurer le couplage avec les secondes ouvertures entaillées (3c).

4. Dispositif de couplage selon l'une quelconque des revendications précédentes, **caractérisé en ce que** l'élément de verrouillage (6) est placé sur la bride de couplage de dispositif fonctionnel (4), de manière à pivoter autour d'un premier axe (A).

5. Dispositif de couplage selon la revendication 4, **caractérisé en ce que** l'élément de fixation (8) est couplé à l'élément de verrouillage (6) de manière à pouvoir pivoter autour d'un axe d'élément de fixation (C) qui est parallèle au premier axe (A) et décalé par rapport à ce dernier.

6. Dispositif de couplage selon la revendication 5, **caractérisé en ce que** l'élément de verrouillage (6) présente un certain contour de déplacement (6b) et la bride de couplage de véhicule utilitaire (3) présente un contour de déplacement (3b) correspondant, dans lequel l'élément de verrouillage (6) au cours du second mouvement de couplage relatif est déplacé par contact mutuel des deux contours de déplacement (3b, 6b) vers la position déverrouillée et **en ce que** l'élément de verrouillage (6), après achèvement du second mouvement de couplage relatif, est déplacé par précharge dans la position verrouillée dans laquelle une surface de verrouillage (6c) de l'élément de verrouillage (6) et un contour de verrouillage (3e) de la bride de couplage de véhicule utilitaire (3) sont en contact l'un avec l'autre.

7. Dispositif de couplage selon l'une quelconque des revendications 4 à 6, **caractérisé en ce que** l'élément d'activation (7) est monté sur la bride de couplage de dispositif fonctionnel (3) (ou (4)), de manière à pouvoir pivoter autour d'un axe d'élément d'activation (B), et comporte une vis (7a) qui peut être déplacée ensemble avec l'élément d'activation suivant une trajectoire autour de l'axe d'élément d'activation (B) et qui s'étend à travers une ouverture de passage (6a) agencée sur l'élément de verrouillage (6), dans lequel l'ouverture de passage (6a) est décalée par rapport au premier axe (A) et, au moins dans la direction du déplacement de la vis (7a), présente un diamètre supérieur au diamètre de vis (7a).

8. Dispositif de couplage selon la revendication 7, **caractérisé en ce que** l'élément de fixation (8) est préchargé vers la position de fixation et l'élément de verrouillage (6) est préchargé vers la position verrouillée par un élément de chargement (9) qui agit entre l'élément de couplage de dispositif fonctionnel (4) et l'élément de fixation (8) à un point décalé par rapport à l'axe d'élément de fixation (C).

9. Dispositif de couplage selon la revendication 8, **caractérisé en ce que** l'élément de fixation (8) est préchargé par l'élément de chargement en contact avec la vis (7a) de l'élément d'activation (7).

10. Dispositif de couplage selon l'une quelconque des revendications 7 à 9, **caractérisé en ce que** l'élément d'activation (7) présente un levier d'activation destiné à assurer le pivotement de l'élément d'activation et une plaque au moyen de laquelle la vis (7a) est couplée au levier d'activation.

11. Dispositif de couplage selon l'une quelconque des revendications précédentes, **caractérisé en ce que**, dans une position finale déverrouillée de l'élément d'activation (7) dans laquelle l'élément de verrouillage (6) est déverrouillé, l'élément de fixation (8), du fait du préchargement, est maintenu en contact avec une section de la bride de couplage de véhicule utilitaire (3).

12. Véhicule utilitaire, en particulier, un tracteur agricole couplé à un dispositif fonctionnel par un dispositif de couplage selon l'une quelconque des revendications précédentes.

13. Tracteur agricole couplé à un chargeur frontal par deux dispositifs de couplage selon l'une quelconque des revendications 1 à 11, qui sont agencés des deux côtés du tracteur agricole dans la zone comprise entre un essieu avant et une cabine de conducteur du tracteur agricole, et qui assurent dans chaque cas le couplage d'un bras du chargeur frontal au tracteur agricole.
